(19) **Europäisches Patentamt**

**European Patent Office**

**Office européen des brevets**

(11) **EP 1 103 583 A1**

(12) **EUROPEAN PATENT APPLICATION**

(43) Date of publication:
**30.05.2001  Bulletin 2001/22**

(51) Int Cl.7: **C09D 7/04**

(21) Application number: **99203916.4**

(22) Date of filing: **23.11.1999**

(84) Designated Contracting States:
**AT BE CH CY DE DK ES FI FR GB GR IE IT LI LU MC NL PT SE**
Designated Extension States:
**AL LT LV MK RO SI**

(71) Applicant: **Condea Servo B.V.**
**7491 AE Delden (NL)**

(72) Inventors:
• **ter Borg, Jan**
**7556 EW Hengelo (NL)**
• **Bieleman, Johan**
**7471 TA Coor (NL)**

(74) Representative: **Ottevangers, Sietse Ulbe et al**
**Vereenigde,**
**Nieuwe Parklaan 97**
**2587 BN The Hague (NL)**

(54) **Anti-skinning agents**

(57) The invention relates to anti-skinning agents for air-drying coating compositions, to compositions comprising said agents and to the use of said compositions to apply a coating on a substrate.

EP 1 103 583 A1

**Description**

The invention relates to anti-skinning agents for air-drying coating compositions, to compositions comprising said agents and to the use of said compositions to apply a coating on a substrate.

Air-drying coating compositions, such as paints, are mostly based on unsaturated resins, dissolved in an organic or aqueous medium. The resin typically is a liquid product. When the composition is applied to a substrate, the unsaturated resin undergoes a chemical conversion in which it is polymerized or cross-linked. As a result, the resin is transformed into a solid material and a solid film, the coating, is formed. The chemical conversion of the resin may be initiated or catalyzed by oxygen (from the air), UV (light), heat and/or a reagent present in the coating composition.

Coating compositions that can dry in the air, such as alkyd paints used for decorative purposes, are usually stored in cans. During storage, the composition may react with the air layer present in the can over the composition. This reaction may result in the formation of a thin skin on top of the coating. This undesired phenomenon is referred to as skinning.

Skinning not only leads to the loss of material, but also to a deterioration of the quality of the coating composition. Prior to use, the formed skin must be removed. It has been found that the strength of driers in the skin is above-average when compared to the remaining coating composition. This means that skinning leads to a prolongation of the drying process. After removal of the skin, parts of it may remain in the coating composition. These parts are visible as disturbing dots or other particles in the dried coating. As a result, the coating has to be grinned of, leading to a considerable increase in costs of the operating process.

In practice, skinning is most frequently encountered with oxidative drying coating compositions. These compositions generally contain air-drying oils or macromolecular binders. Examples of air-drying resins are alkyd resins, epoxide-esters, urethane-alkyds and further modified oils.

In order to prevent skinning, several approaches have been adopted by the coating industry.

In a first approach, the composition of the coating composition may be adjusted. A reduction or a change of the part of drier catalyst or film-forming resin could lead to a reduction of the skinning. However, as a consequence, general coating material characteristics, like the drying process, could be affected adversely.

According to a second possibility, in the case of oxidative drying coating compositions, the space above the coating composition in the can may be filled with an inert atmosphere, such as nitrogen gas. In the absence of oxygen, the skinning phenomenon will not occur. However, this approach has several economical and practical disadvantages. The inert atmosphere would have to be renewed after each opening and closing of the can.

A third approach is based on the inverse storage of the can. Only during use, the can will be put back in its normal position. This method is, however, risky. It is not attractive for marketing reasons and not very useful.

The most successful method for preventing skinning of coating compositions, is the addition of anti-skinning agents to the compositions as additives. Examples of such agents may be classified as antioxidants, blocking agents, solvents or retention agents. In this regard, reference is made to chapter 8 of "Lackadditive", Ed. J.H. Bieleman, Wiley-VCH, Weinheim, Germany, 1998.

It has been found that blocking agents for the polymerization catalyst present in a coating composition show the best results. In practice, methyl ethyl ketoxime (MEKO) is nowadays mostly used for this purpose. This agent is, however, highly toxic and it is expected that its use in consumer products like paints may soon be prohibited as a result of changing government regulations.

The present invention seeks to provide a new anti-skinning agent for coating compositions which may be used as an alternative for MEKO. More specifically, an anti-skinning agent is sought that effectively prevents skinning in coating compositions, which' presence is well tolerated by the various constituents of the coating composition, which' effect on the drying time, the fading and film characteristics, the odor, and viscosity of the coating composition is acceptable, and which' toxicity is within acceptable limits.

Surprisingly, it has now been found that skinning on coating compositions can effectively be prevented with an aldoxime or a ketoxime having no more than three carbon atoms. The invention accordingly relates to a coating composition comprising as an anti-skinning agent aldoxime or a ketoxime having two or three carbon atoms.

The present anti-skinning agents offer excellent properties. They inhibit skin formation on coating compositions, in particular on oxidative coating compositions, to a far extent. Furthermore, they hardly affect the drying properties of a coating composition in which they are incorporated, if at all. The toxicity of the present anti-skinning agents, particularly of the aldoximes, is significantly less than that of MEKO, making them highly suitable alternatives. It has moreover been found that the present anti-skinning agents are significantly less toxic than aldoximes or ketoximes having four or more carbon atoms, in that they show a much smaller uptake through (human) skin. Thus, coating compositions comprising the present anti-skinning agents only form a defined health hazard, which remains within acceptable limits, to their users.

Oximes, such as aldoximes and ketoximes, belong to the chemical class of imines. Aldoximes may be prepared by reacting an aldehyde with hydroxylamine or hydroxylamine sulfate. By way of example, propionaldoxime can be prepared by starting from propionaldehyde and reacting this compound in a direct transformation with hydroxylamine into propionaldoxime. In practice, the reaction will be carried out under mild acidic conditions, e.g. in an aqueous medium comprising acetic acid and sodium acetate or diluted sulfuric acid and ammonium sulfate.

An anti-skinning agent according to the invention can be added to any type of coating compositions. The term coating composition as used herein is intended to include paints and inks. Although the present anti-skinning agents have been found effective in both aqueous coating systems and in coating systems based on organic, apolar solvent, the latter group seems to benefit most from their presence. Preferably, the coating compositions is of the air-drying or oxidative type, which means that it hardens (cures) after application under the influence of oxygen.

The coating compositions may comprise any conventional ingredients, such as resins, pigments, solvents, and additives. The term additives refers to auxiliary products which, even in small quantities, improve the technical properties of a coating composition. Typical examples of additives include thickeners, solvents, dispersants, driers and the like.

Examples of resins that may be present include alkyd resins, epoxy-esters, urethane-alkyds and further modified oils. The resin may be present in an amount of between 10 and 50 wt.%, based on the weight of the (liquid) coating composition. Air drying alkyd resins are esters from drying oils, such as linseed oil, soybean oil, tungoil, and other oils having unsaturated groups in there alkyl chain.

The pigment may be inorganic or organic in nature. Typical inorganic pigments are for instance titanium dioxide, iron-oxide red, iron-oxide yellow, and iron-oxide black. Typical organic pigments are for example naphtol red, phtalocyanine blue, and phtalocyanine green. The pigment content may vary between 0 and 80 wt.%, based on the total weight of the (liquid) coating composition.

The solvent will usually be an organic solvent. Examples of solvents that are typically used in coating compositions are mineral spirits, known as white spirit, as well as xylene, glycol ethers, ketones, esters and mixtures thereof. Thickeners are usually polyamid derivatives, bentonites and/or silicates.

As catalyst for promoting the polymerization or cross-linking (curing) during the film forming process after the liquid coating composition has been applied to a substrate, metallic soaps that are soluble in the used binders can be employed. These catalysts are often referred to as driers. Examples of driers include cobalt octoate, strontium octoate, copper octoate, zirconium octoate, zinc octoate and calcium octoate. These catalysts are usually used in the form of combinations of two, three or four different metallic soaps. Typical amounts wherein the catalysts are used range between 0.1 and 5 wt.%, based on the total weight of the (liquid) coating composition.

Other ingredients that may be present in the coating composition depend on the envisaged application of the composition. Examples are anti-settling agents, anti-sagging agents, de-airing agents, and the like. The sum of the amounts of the various additives will usually not exceed 5 wt.%, based on the total weight of the (liquid) coating composition. Based on the above and his general expertise, such as it is represented in e.g. The Proceedings of the FATIPEC Congress Interlaken 1998, page A-285, published by P. Zehnder AG, Zurich, Switzerland, or in Resin Book, edition of 1996, AKZO Nobel Resins, Bergen Op Zoom, The Netherlands, the skilled person will be able to formulate a coating composition appropriate for a given application.

The anti-skinning agent may be added to the coating composition at any time during its formulation. Of course, it is possible to use only one of the above compounds as anti-skinning agent, but also to employ combinations. The agent can be added during the let-down stage of the preparation of the coating composition, can be premixed with the drier or with another ingredient, or can be added to the composition

after this has been filled into a storage tank or can. Typically, the anti-skinning agent will be used in an amount between 0.1 and 5 wt.%, preferably up to 2 wt.%, based on the weight of the composition. The optimal dosage depends on the drying characteristics of the coating composition and its tendency to exhibit skinning. In high-reactive oxidative drying, so-called 'High-Solid' coating compositions higher dosages of up to 2.5 wt.%, based on the weight of the composition, may be used. The applied film thickness of High Solid coatings is much higher compared to medium solids alkyd paints. These higher concentrations ensure that the composition does not dry too fast at its top layer, after application on a substrate. A too fast drying (curing) at the surface would prevent the penetration of air (oxygen) and might have the effect that the solvent and possibly formed gasses cannot evaporate and are captured within the coating. This could lead to surface defects of the coating.

The coating composition comprising an anti-skinning agent according to the invention may be employed in the usual manner. The will be suitable for application in any known way on the same substrates as the known coating compositions.

The invention will now be elucidated by the following, non-restrictive examples.

**Example I: Preparation of Propionaldoxime**

A solution of ammoniumhydroxide (25% in water; 480 gram) was gradually added to a stirred mixture of propionaldehyde (365 gram) and a solution of hydroxylammoniumsulfate (10.97% in water; 1950 gram) until a pH of 5.65 was reached. During the addition the temperature of the reaction mixture was mantained below 35°C. When the reaction was completed the mixture was poured into a separating funnel and the aqueous layer was removed. The upper layer was purified by distillation to give pure propionaldoxime (258 gram; purity > 99% according to GC).

**Example II**

Acetaldoxim is a crystalline product and as such difficult to handle and to incorporate in a paint system. The solubility can be improved reducing the solid content by addition of liquid lacquers solvents. Its appearance is illustrated in Table I.

Table I

| anti-skinning agent | Appearance at 5°C | Appearance at 20°C |
|---|---|---|
| Exkin2 (MEKO) | clear liquid | clear liquid |
| Acetaldoxim | solid crystalline | solid crystalline |
| Acetaldoxim - 90 % in water | clear liquid | clear liquid |
| Acetaldoxim - 80% in HEEU-75% in water * | clear liquid | clear liquid |
| Acetaldoxim - 50% in dipropylene glycol methylether | clear liquid | clear liquid |
| Propionaldoxim | clear liquid | clear liquid |

* Hydroxy Ethyl Ethylene Ureum

**Example III**

The performances of the various anti-skinning agents are evaluated in a white air-drying paint of a composition as shown in Table II.

Table II

| wt.% | |
|---|---|
| 53.4 | SETAL 16 LV WS-70 (long oil linseed alkyd resin, AKZO Nobel Resins B.V.) |
| 28.5 | Kronos 2190 (titanium dioxide, Kronos GmbH) |
| 0.3 | SER-AD FA601 (anionic pigment dispersant, CONDEA Servo B.V.) |
| 3.75 | Nuodex Combi APB (drier, CONDEA Servo B.V.) |
| (14.05-a*) | Shellsol D60 (mineral solvent, Shell) |
| a* | anti-skinning agent |
| 100.0 | paint |

*"a" represents the amount of anti-skinning agent used. The different amounts of the different anti-skinning agents used are shown in table III.

Table III

| anti-skinning agent | days first skin formation observed after filling | drying time in hrs, stages a,b,c. according ASTM 5895-96 Wet layer thickness 38 μm; at 23°C. | | |
|---|---|---|---|---|
| | | b | a | c |
| none | Less than 1 (6 hrs) | 0.30 | 1.15 | 2.00 |
| 0.2% Exkin2 (MEKO) | 11 | 0.30 | 1.15 | 2.00 |
| 0.3% Exkin2 | 14 | 0.40 | 1.15 | 2.30 |
| 0.4% Exkin2 | >50 | 0.45 | 1.15 | 3.15 |
| 0.2% Acetaldoxim | 14 | 0.45 | 3.15 | 5.45 |
| 0.3% Acetaldoxim | >50 | 0.45 | 3.15 | 5.45 |
| 0.4% Acetaldoxim | >50 | 0.45 | 4.00 | 6.00 |
| 0.2% Propionaldoxim | 8 | 0.30 | 3.30 | 4.00 |
| 0.3% Propionaldoxim | >50 | 0.40 | 3.30 | 4.30 |
| 0.4% Propionaldoxim | >50 | 0.40 | 3.30 | 4.30 |
| 0.2% 2-Methyl Butyraldoxim | 8 | 0.45 | 4.15 | 5.15 |
| 0.3% 2-Methyl Butyraldoxim | 11 | 0.45 | 4.15 | 5.30 |
| 0.4% 2-Methyl Butyraldoxim | 14 | 0.45 | 4.00 | 5.30 |
| 0.2% 3-Methyl Butyraldoxim | 8 | 0.30 | 3.15 | 4.45 |
| 0.3% 3-Methyl Butyraldoxim | 14 | 0.40 | 4.15 | 6.30 |
| 0.4% 3-Methyl Butyraldoxim | 20 | 0.50 | 4.30 | 6.15 |
| 0.2% Heptanaldoxime | 3 | 0.40 | 3.45 | 9.00 |
| 0.3% Heptanaldoxime | 7 | 0.50 | 4.30 | 7.00 |
| 0.4% Heptanaldoxime | 14 | 1.00 | 5.30 | 6.30 |

**Example IV**

The performances of the various anti-skinning agents are evaluated in clear woodoil-alkyd varnish of the composition shown in table IV.

Table IV

| wt.% | |
|---|---|
| 31.5 | Woodoil |
| 52.5 | Uralac AD 130 W70 (long oil alkyd based on sunflower oil, DSM Resins, The Netherlands) |
| (11.5-a*) | Shellsol D60 |
| 4.5 | Nuodex Combi HS (drier, CONDEA Servo B.V) |
| a * | anti-skinning agent |
| 100.0 | ClearVarnish |

* "a" represents the amount of anti-skinning agent used. The different amounts of the different anti-skinning agents used are shown in table V.

Table V

| anti-skinning agent | days first skin formation observed after filling | Set to touch, 60 µm wet layer at 23°C |
|---|---|---|
| none | 30 minutes | 2 hrs |
| 0.50% Exkin2 (MEKO) | 1 day | 2 hrs |
| 0.50% Acetaldoxim | 4 days | 4 hrs |
| 0.50% Acetaldoxim -90 % in water | 4 days | 4 hrs |
| 0.66% Acetaldoxim - 80% in HEEU-75% in water * | 4 days | 4 hrs |
| 1.00% Acetaldoxim 50% in dipropylene glycol methylether | 4 days | 4 hrs |
| 0.50% Propionaldoxim | 4 days | 3 hrs |

**Claims**

1.  A coating composition comprising as an anti-skinning agent an aldoxime or a ketoxime having two or three carbon atoms.

2.  A coating composition according to claim 1, wherein the anti-skinning agent is acetaldoxime or propionaldoxime.

3.  A coating composition according to claim 1 or 2, wherein the anti-skinning agent is present in an amount of between 0.1 and 5 wt.%, based on the weight of the composition.

4.  A coating composition according to any of the preceding claims comprising as a solvent an organic, apolar solvent.

5.  A coating composition according to any of the preceding claims, which composition is an air-drying or oxidative coating composition.

6.  A process for preparing a coating composition according to any of the preceding claims comprising adding to a mixture of conventional coating composition ingredients an aldoxime or a ketoxime having two or three carbon atoms.

7.  A process according to claim 6, wherein the coating composition comprises as a solvent an organic, apolar solvent and wherein acetaldoxime is added as the skinning agent together with an amount of water up to 10 wt.%, based on the weight of the composition.

8.  Use of a coating composition according to any of the claims 1-5 for applying a coating to a substrate.

9.  An anti-skinning agent in the form of an aldoxime or a ketoxime having two or three carbon atoms.

10. Use of an aldoxime or a ketoxime having no more than three carbon atoms as anti-skinning agent in a coating composition.

European Patent Office

## EUROPEAN SEARCH REPORT

Application Number

EP 99 20 3916

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 4 139 507 A (R. SUNDIE ET AL.) 13 February 1979 (1979-02-13) * column 2, line 67 - column 3, line 28; claims; table II * | 1-7 | C09D7/04 |
| A | GB 1 602 116 A (H. DISON ET AL.) 4 November 1981 (1981-11-04) * claims * | 1-10 | |

| TECHNICAL FIELDS SEARCHED (Int.Cl.7) |
|---|
| C09D |

The present search report has been drawn up for all claims

| Place of search | Date of completion of the search | Examiner |
|---|---|---|
| BERLIN | 28 March 2000 | Boeker, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 99 20 3916

This annex lists the patent family members relating to the patent documents cited in the above-mentioned European search report.
The members are as contained in the European Patent Office EDP file on
The European Patent Office is in no way liable for these particulars which are merely given for the purpose of information.

28-03-2000

| Patent document cited in search report | | Publication date | Patent family member(s) | | Publication date |
|---|---|---|---|---|---|
| US 4139507 | A | 13-02-1979 | EP | 0003163 A | 25-07-1979 |
| | | | JP | 54102333 A | 11-08-1979 |
| GB 1602116 | A | 04-11-1981 | NONE | | |

EPO FORM P0459

For more details about this annex : see Official Journal of the European Patent Office, No. 12/82